# EUROPÄISCHE PATENTANMELDUNG

(11) **EP 1 283 411 A1**
(43) Veröffentlichungstag der Anmeldung: **12.02.2003**
(21) Anmeldenummer: 02008882.9
(22) Anmeldetag: 20.04.2002
(51) Int. Cl.: G01F 15/12

(54) **Schutzeinrichtung für einen Durchflusssensor**

(30) Priorität: 10.08.2001 DE 10139529; 09.04.2002 DE 10215514
(71) Anmelder: Pierburg GmbH, 41460 Neuss (DE)
(72) Erfinder: Wienecke, Thomas, 47877 Willich (DE); Graulich, Alexander, 52222 Stolberg (DE); Borowy, Willi, 41564 Kaarst (DE); Lösing, Karl-Heinrich, Dr., 46519 Alpen (DE); Blaszczyk, Johann, 41542 Dormagen (DE)
(74) Vertreter: Ter Smitten, Hans

(57) **Zusammenfassung**

Bekanntlich werden im zu messenden strömenden Medium auch Partikel (6), bedingt durch undichte oder schlechte Luftfiltergehäuse oder dergleichen, durch einen Strömungsdurchbruch (2.1) eines Sensors (2) transportiert.

Es wir nun vorgeschlagen, vor den Strömungsdurchbruch (2.1) eine Schutzeinrichtung (3) anzubringen, an dem sich die Wassertropfen eines zu messenden Gases absetzen, die auf dem normalen Weg den Messweg (2.1) des Sensors (2) erreichen würden. Diese Schutzeinrichtung (3) besteht aus einem Rundstab, der entweder senkrecht oder schräg zum Sensor (2) jedoch parallel zum Strömungsdurchbruch (2.1) verlaufend angeordnet ist. Durch die Athässionskräfte bleiben die Wassertropfen (7) am Rundstab hängen oder werden wie die Partikel (6) am Messkanal (2.1) des Sensors (2) vorbei gelenkt.

## Beschreibung

Die Erfindung betrifft eine Schutzeinrichtung für einen Sensor, insbesondere Luftmassensensor nach dem Oberbegriff des Patentanspruchs 1.

In der DE 198 08 248 A1 wird eine Messvorrichtung zur Messung der Masse eines strömenden Mediums offenbart. Insbesondere ist hierbei ein Strömungsdurchbruch beschrieben, der einen Strömungskanal besitzt, welcher im Einlaufquerschnitt eine Verjüngung aufweist, in parallel zueinander führenden Seiten mündet, um sich danach erneut aufzuweiten. Dadurch wird eine Strömungsgeschwindigkeitserhöhung im Messgebiet, das heißt am Messelement der Messvorrichtung erreicht. Bekanntlich werden im Medium auch Partikel, beispielsweise bedingt durch undichte oder schlechte Luftfiltergehäuse, durch den Strömungskanal mit transportiert. Bei größeren Partikeln können diese auf das Messelement treffen und dieses zerstören.

Aus der DE 199 53 776 A1 ist eine Schutzeinrichtung für Messelemente eines Luftmassensensors bekannt, bei der ein Strömungskanal eines Strömungsdurchbruches mit einer Umlenkschikane in einer Zuleitung sowie in einer Ableitung des Strömungskanals versehen ist, so dass die mit dem strömenden Medium transportierten Partikel abgefangen bzw. umgelenkt werden und so diese das Messelement nicht oder kaum erreichen.

Aus der DE 312 49 60 C2 ist eine Schutzeinrichtung bekannt, die vor dem Strömungskanal einer Messeinrichtung einen Ablenkkörper aufweist, der tropfenförmig ausgebildet ist. Dadurch wird der Mediumströmung ein möglichst geringer Widerstand entgegengesetzt und das Eindringen von Partikeln verhindert. Der Ablenkkörper ist in unmittelbarer Nähe zum Messspalt angebracht.

Aufgabe der Erfindung ist, eine weitere Schutzeinrichtung für einen Sensor aufzuzeigen, durch die vermieden wird, dass sich auf dem Sensor Schmutzpartikel und /oder Wassertropfen absetzen können.

Gelöst wird die Aufgabe durch die Merkmale des Patentanspruchs 1.

Der Erfindung liegt die Idee zugrunde, vor einen Sensor zur Messung des Massendurchflusses eines strömenden Mediums einen Rundstab anzubringen, an dem sich zumindest Wassertropfen eines zu messenden Gases absetzen, die auf dem normalen Weg den Messweg und damit Messelemente des Sensors erreichen würden. Gleichzeitig werden mitgeführte Partikel aus der Strömung des Gases um den Messweg geführt. Durch die Athässionskräfte bleiben die Wassertropfen am Rundstab hängen oder werden am Messkanal des Sensors vorbei gelenkt.

In Weiterführung der Erfindung ist der Rundstab nach einem Sieb angebracht, an dem sich bereits derartige, das Messergebnis verfälschend oder die Messelemente zerstörende Teilchen absetzen. Vorteilhaft ist eine schräge Anordnung des Rundstabes im Messrohr, wobei der Rundstab selbst zum Messweg in tangentieller Lage ausgerichtet ist . Dadurch können die am Stab hängenbleibenden Wassertröpfchen besser gegen die Innenwand des Messrohrs abgeleitet werden.

Eine weitere vorteilhafte Ausführung ergibt den Einbau eines zusätzlichen Innenrohres, welches den eigentlichen Messweg des Sensors abdeckt und innerhalb des Messrohres angebracht ist. Dies hat den Vorteil, dass sich am Rundstab sammelnde Wassertropfen eine ungewollte Größe nicht erreichen können, was einen sonst möglichen Abriß der Wassertropfen verhindert.

Der Rundstab kann voll massiv oder hohl ausgeführt sein. Das Material ist beispielsweise ein PBT-Kunststoff.

Um die Schutzeinrichtung für einen Sensor, insbesondere einen Luftmassensensor noch weiter zu verbessern, wird in Weiterführung der Erfindung vorgeschlagen, zwei Flügel in ein Messrohr einzubinden, die Luft und damit Wasser in eine bestimmte Richtung und damit vom Sensor weg lenken. Die Ausrichtung der Flügel sollte dabei zwischen 30° und 90° zur Senkrechten im Messrohr variabel sein. Zusätzlich kann ein zum Wasserabscheider zugehöriger Rundstab in einem Winkel von 20° zur Senkrechten eingebaut werden.

Anhand eines Ausführungsbeispieles mit Zeichnung soll die Erfindung näher erläutert werden.
Es zeigt
- Fig. 1: eine Schutzeinrichtung mit einem Luftmassensensor in einem Messrohr,
- Fig. 1a: eine Darstellung der Strömung eines Messgases am Luftmassensensor im Schnitt A-A,
- Fig. 2: eine Variante der Anordnung der Schutzeinrichtung
- Fig. 3: eine weitere Schutzeinrichtung,
- Fig. 4: eine Darstellung der Schutzeinrichtung im Schnitt B-B aus Fig. 3.

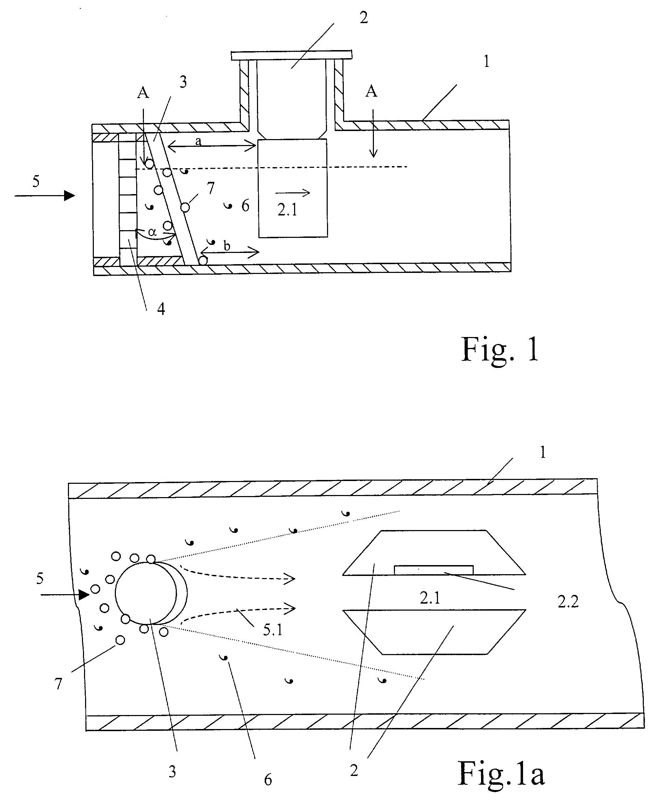

In Fig. 1 ist ein hier als Messrohr bezeichnetes Rohr 1, welches Teil einer Leitung, beispielsweise einer Ansaugleitung einer Brennkraftmaschine sein kann, dargestellt, in das ein in bekannter Art und Weise ausgeführter Luftmassensensor 2 hinein ragt. Vor dem Luftmassensensor 2 ist ein Rundstab 3 angeordnet, der in einer besonderen Ausführung innerhalb des Messrohres 1 zum Strömungskanal 2.1, dem eigentlichen Messkanal des Luftmassensensors 2, schrägt eingebracht und angeordnet ist. Eine senkrechte Anordnung ist gleichfalls möglich. Das Messrohr 1 weist am vorderen Abschnitt 1.1 ein eingebautes Sieb 4 auf.
Bekanntlich strömt ein Messgas 5 entlang des Luftmassensensors 2, um die Masse des strömenden Gases messen bzw. bestimmen zu können. Der hier aufgezeigte Luftmassensensor 2 besitzt seinen eigenen Mess- bzw. Strömungskanal 2.1, durch den das Messgas 5 durch den Luftmassensensors 2 geführt wird, der im Strömungskanal 2.1 wenigstens ein Messelement 2.2. aufweist, an das das Messgas 5 entlang geführt wird.

Mit einströmendem Messgas 5 bleiben bereits diverse Schmutzpartikel 6 und Wasserstofftröpfchen 7 am Sieb 4 hängen. Die Praxis hat gezeigt, dass jedoch ein noch erheblicher Anteil an derartigen Partikeln 6 und Tröpfchen 7 das Sieb 4 durchqueren und auch Messverfälschungen am Luftmassensensor 2 hervorrufen können. Die das Sieb 4 passierenden Partikel 6 und Tröpfchen 7 gelangen nun an die Schutzeinrichtung, den Rundstab 3, an dem sie durch Athässion entweder aufgehalten oder am Strömungskanal des Luftmassensensors 2 2.1, der hier als ein optimierter Venturi ausgeführt ist, vorbei geführt werden. Dabei werden vorrangig die im direkten Messweg zum Strömungskanal 2.1 befindlichen Wassertröpfchen 7 am Rundstab 3 hängen bleiben und an diesem ablaufen.

Dies setzt einen vorgegebenen Abstand des Rundstabes 3 zum Luftmassensensor 2 voraus. Durch die bevorzugte Schräglage des Rundstabes 3 wird zudem das Ablaufen der Wassertröpfchen 7 erleichtert.

Wie In Fig. 1 erkennbar, ist der Rundstab 3 vorzugsweise mit dem Sieb 4 mechanisch verbunden. Gegenüber dem senkrecht nach unten in das Messrohr 1 weisenden Luftmassensensor 2 weist der Rundstab 3 in einer vorteilhaften, praxisnahen Ausführung einmal einen ersten oder oberen Abstand a von ca. 10- 13,5 mm sowie einen zweiten oder unteren Abstand b von ca. 10-15 mm auf. Dabei wird die bevorzugte schräge Lage des Rundstabes 3 mit einem Winkel α von ca. 5° gegenüber dem Sieb 4 eingestellt. Der Rundstab 3 weist neben dieser Winkellage α von 5 ° beispielsweise einen Durchmesser von 5 mm auf. Es sind aber auch Winkellagen α von bis zu 45° möglich. Diese bewirken aber eine Verlängerung des Messrohres 1 in diesem Abschnitt. Auch die Dicke bzw. der Durchmesser des Rundstabes 3 ist variabel.

In Fig. 1a ist das Prinzip bzw. die Anordnung der Schutzeinrichtung, welche aus dem Rundstab 3 besteht, näher und insbesondere in diesem Bereich vergrößert dargestellt.
Das Messgas 5 fließt am Rundstab 3 vorbei und die Wassertröpfchen 7 an diesem ab. Die Schmutzpartikel 6 und nicht aufgefangene Wassertröpfchen 7 fließen am Strömungskanal 2.1 vorbei, in den nur das verbleibende, keine Wassertröpfchen 7 und Schmutzpartikel 6 mehr aufweisende Messgas 5.1 entlang der Messelemente 2.2 strömt, die im Messweg bzw. Strömungskanal 2.1 des Luftmassensensors 2 liegen.

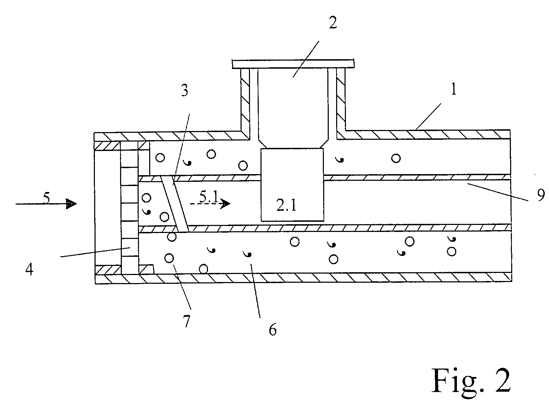

In Fig. 2 ist eine weitere Maßnahme zum Schutz des Luftmassensensors 2 vorgesehen. Dazu wird in das Messrohr 1 ein weiteres Innenrohr 9 eingebracht, in dem der Rundstab 3 als auch der Strömungskanal 2.1 des Sensors 2 integriert sind. Der Durchmesser des Innenrohres 9 bestimmt sich vorzugsweise aus der Größe bzw. Länge des Strömungskanals 2.1, d.h. das Innenrohr 9 beträgt zumindest einen Durchmesser, bei dem sichergestellt ist, dass das / die Messelemente 2.2 das Messgas 5.1 sicher detektieren können.

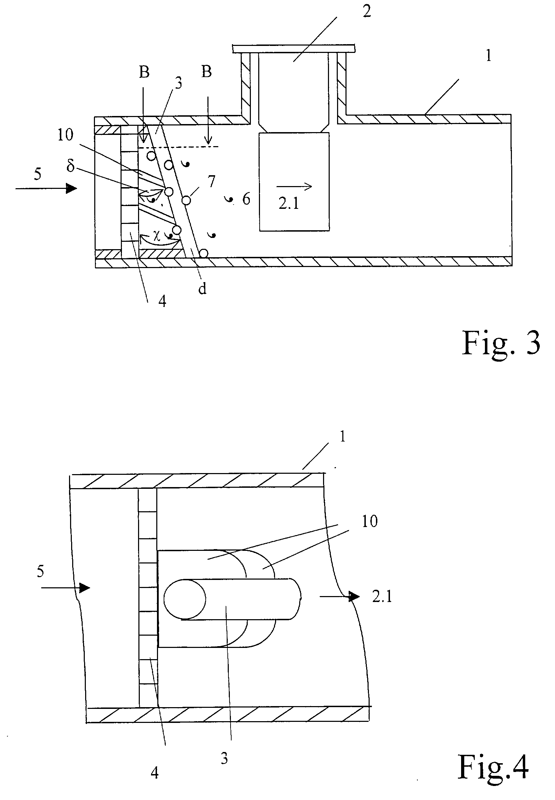

Eine weitere Schutzeinrichtung ist in Fig. 3 dargestellt. Vor dem Luftmassensensor 2 ist der Rundstab 3 angeordnet, der innerhalb des Messrohres 1 zum Strömungskanal 2.1 schrägt eingebracht und angeordnet ist. Der Winkel χ der Schräglage beträgt vorzugsweise 20° zur Senkrechten. Der Durchmesser d des Rundstabes 3 sollte auch hierbei vorzugsweise 5 mm betragen.

Das Messrohr 1 weist am vorderen Abschnitt 1.1 das eingebaute Sieb 4 auf, auf welches bezogen die Senkrechte gekennzeichnet ist. Am Rundstab 3 ist zumindest ein, vorzugsweise zwei Flügel 10 angebracht, deren Ausrichtung zur Senkrechten δ zwischen 30° und 90° variabel ist. Der Rundstab 3 ist mit dem Sieb 4 vorzugsweise mechanisch verbunden.

Ein einströmendes Messgas 5 entlang des Luftmassensensors 2 wird durch diesen Wasserabweiser 3, 10 besser von Wassertröpfchen 7 und Schmutzpartikel 6 befreit .

In Fig. 4 ist diese Weiterführung der Übersichtlichkeit halber noch einmal in einer Draufsicht dargestellt.

Der vorgeschlagene Wasserabweiser kann auch in das Ausführungsbeispiel nach Fig. 2 interiert werden.

## Patentansprüche

1. Schutzeinrichtung (3) für die Messung eines Massenstromes (5) mit einem Sensor (2), insbesondere mit einem Luftmassensensor, wobei wenigstens ein Messelement in einem Strömungskanal (2.1) angeordnet ist, an dem das strömende Medium entlang geführt wird, **dadurch gekennzeichnet, dass**
- ein Rundstab (3) vor dem Strömungskanal (2.1) angebracht ist.

2. Schutzeinrichtung nach Anspruch 1, **dadurch gekennzeichnet, dass** der Rundstab (3) senkrecht zum Strömungskanal (2.1) ausgerichtet ist.

3. Schutzeinrichtung nach Anspruch 2, **dadurch gekennzeichnet, dass** der Rundstab (3) einen Abstand zum Sensor (2) zwischen 7 bis 15 mm aufweist.

4. Schutzeinrichtung nach Anspruch 1, **dadurch gekennzeichnet, dass** der Rundstab (3) schräg zum Strömungskanal (2.1) ausgerichtet ist.

5. Schutzeinrichtung nach Anspruch 4, **dadurch gekennzeichnet, dass** der Rundstab (3) gegenüber dem Sensor (2) einen oberen Abstand (a) von 10-15 mm sowie einen unteren Abstand (b) von 7-13 mm aufweist.

6. Schutzeinrichtung nach einem der Ansprüche 4 bis 5, **dadurch gekennzeichnet, dass** der Rundstab (3) eine schräge Lage mit einem Winkel (α) von 1° bis 45° gegenüber dem Sieb (4) einnimmt.

7. Schutzeinrichtung nach einem der Ansprüche 1 bis 6, **dadurch gekennzeichnet, dass** der Rundstab (3) voll massiv ausgebildet ist.

8. Schutzeinrichtung nach einem der Ansprüche 1 bis 6, **dadurch gekennzeichnet, dass** der Rundstab (3) hohl ausgebildet ist.

9. Schutzeinrichtung nach einem der vorgenannten Ansprüche, **dadurch gekennzeichnet, dass** ein zusätzliches Innenrohr (9) in das Messrohr (1) eingebracht ist, in dem der Rundstab (3) und des Strömungskanal (2.1) des Sensors (2) angeordnet sind.

10. Schutzeinrichtung nach einem der vorgenannten Ansprüche, **dadurch gekennzeichnet, dass** mit dem Rundstab (3)
- wenigstens ein Flügel (10) derart zusammenwirkt, dass
- im strömenden Medium vorhandene Wassertröpfchen (7) und Partikel (6) an diesen abgefangen werden.

11. Schutzeinrichtung nach Anspruch 10, **dadurch gekennzeichnet, dass** der zumindest eine Flügel (10) am Rundstab (3) angebracht ist.

12. Schutzeinrichtung nach Anspruch 10, **dadurch gekennzeichnet, dass** der zumindest eine Flügel (10) am Sieb (4) befestigt ist.

13. Schutzeinrichtung nach einem der vorgenannten Ansprüche, **dadurch gekennzeichnet, dass** der Winkel (χ) der Schräglage des Rundstabes (3) 20° zur Senkrechten beträgt.

14. Schutzeinrichtung nach einem der Ansprüche, **dadurch gekennzeichnet, dass** die Ausrichtung (δ) des wenigstens einen Flügel (10) zur Senkrechten zwischen 30° und 90° variabel ist.

15. Schutzeinrichtung nach einem der Ansprüche, **dadurch gekennzeichnet, dass** zwei Flügel (10) vorhanden sind.
